(19) Europäisches Patentamt
European Patent Office
Office européen des brevets

(11) Veröffentlichungsnummer : **0 144 800**
**B1**

(12) # EUROPÄISCHE PATENTSCHRIFT

(45) Veröffentlichungstag der Patentschrift : **21.01.87**

(51) Int. Cl.[4] : **C 07 C161/00**, A 01 N 41/00

(21) Anmeldenummer : **84113558.5**

(22) Anmeldetag : **09.11.84**

(54) **Herbizide Diphenylether, Verfahren zu ihrer Herstellung und ihre Verwendung zur Bekämpfung unerwünschten Pflanzenwuchses.**

(30) Priorität : **19.11.83 DE 3341828**
**15.09.84 DE 3433977**

(43) Veröffentlichungstag der Anmeldung : **19.06.85 Patentblatt 85/25**

(45) Bekanntmachung des Hinweises auf die Patenterteilung : **21.01.87 Patentblatt 87/04**

(84) Benannte Vertragsstaaten : **BE CH DE FR GB IT LI NL**

(56) Entgegenhaltungen :
**EP-A- 0 091 023**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Parg, Adolf, Dr.**
**Paray-le-Monial-Strasse 8**
**D-6702 Bad Duerkheim (DE)**
Erfinder : **Hamprecht, Gerhard, Dr.**
**Rote-Turm-Strasse 28**
**D-6940 Weinheim (DE)**
Erfinder : **Wuerzer, Bruno, Dr. Dipl.-Landw.**
**Ruedigerstrasse 13**
**D-6701 Otterstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft Diphenylether, Verfahen zu ihrer Herstellung, Herbizide, die diese Verbindungen als Wirkstoffe enthalten sowie ihre Verwendung zur Bekämpfung unerwünschten Pflanzenwuchses.

Aus der Literatur sind verschiedene herbizide Wirkstoffe aus der Klasse der Diphenylether bekannt, die in ortho-Stellung zur Nitrogruppe einen substituierten Aminosulfonylrest tragen (DE-OS 2 261 918, DE-OS 2 833 021).

Es wurde gefunden, daß Diphenylether der Formel

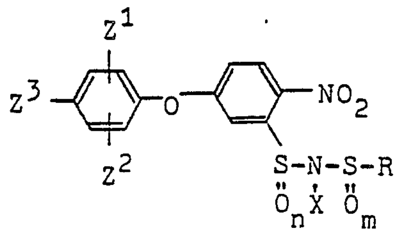

(I)

in der

$Z^1$ und $Z^2$ jeweils unabhängig voneinander Wasserstoff, Halogen, Nitro, Cyano, Carboxy, $C_1$-$C_4$-Alkyl, $C_1$-$C_4$-Halogenalkyl oder $C_1$-$C_4$-Alkoxy,

$Z^3$ Halogen, Nitro, Cyano, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylmercapto, $C_1$-$C_4$-Halogenalkylmercapto, $C_1$-$C_4$-Alkylsulfinyl, $C_1$-$C_4$-Halogenalkylsulfinyl, $C_1$-$C_4$-Alkylsulfonyl oder $C_1$-$C_4$-Halogenalkylsulfonyl,

X Wasserstoff, $C_1$-$C_4$-Alkyl, gegebenenfalls halogensubstituiertes Acyl mit bis zu 7 Kohlenstoffatomen, ein Alkalimetallion oder ein gegebenenfalls alkyliertes Ammoniumion,

R $C_1$-$C_{20}$-Alkyl, $C_1$-$C_{12}$-Halogenalkyl, einen gegebenenfalls durch Halogen substituierten araliphatischen Rest mit 7 bis 20 Kohlenstoffatomen, Cycloalkyl mit 3 bis 12 Kohlenstoffatomen, gegebenenfalls substituiertes Phenyl, Amino, $C_1$-$C_4$-Alkylamino oder Di-$C_1$-$C_4$-alkylamino, und

n und m jeweils unabhängig voneinander die Zahlen 0, 1 oder 2 bedeuten, je nach Aufbereitung und Dosierung total oder selektiv herbizid sind.

$Z^1$ und $Z^2$ in Formel I bedeuten jeweils unabhängig voneinander Wasserstoff, Halogen, Nitro, Cyano, Carboxy, $C_1$-$C_4$-Alkyl, $C_1$-$C_4$-Halogenalkyl oder $C_1$-$C_4$-Alkoxy, beispielsweise Fluor, Chlor, Brom, Jod, Methyl, Ethyl, n-Propyl, i-Propyl, n-Butyl, tert.-Butyl, Trifluormethyl, Difluormethyl, Fluormethyl, Trichlormethyl, Dichlormethyl, Chlormethyl, Difluorchlormethyl, 1-Chlorethyl, 2-Chlorethyl, 1-Fluorethyl, 2-Fluorethyl, 2,2,2-Trichlorethyl, 2,2,2-Trifluorethyl, 1,1,2,2-Tetrafluorethyl, 1,1,2-Trifluor-2-chlorethyl, 1,1,2,2,2-Pentafluorethyl, Methoxy, Ethoxy, n-Propyloxy, i-Propyloxy oder tert.-Butyloxy.

$Z^3$ in Formel I bedeutet Halogen, Nitro, Cyano, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylmercapto, $C_1$-$C_4$-Halogenalkylmercapto, $C_1$-$C_4$-Alkylsulfinyl, $C_1$-$C_4$-Halogenalkylsulfinyl, $C_1$-$C_4$-Alkylsulfonyl oder $C_1$-$C_4$-Halogenalkylsulfonyl, beispielsweise $Z^3$ Fluor, Chlor, Brom, Jod, Methyl, Ethyl, n-Propyl, i-Propyl, n-Butyl, tert.-Butyl, Trifluormethyl, Difluormethyl, Fluormethyl, Trichlormethyl, Dichlormethyl, Chlormethyl, Difluormethyl, 1-Chlorethyl, 2-Chlorethyl, 1-Fluorethyl, 2-Fluorethyl, 2,2,2-Trichlorethyl, 2,2,2-Trifluorethyl, 1,1,2,2-Tetrafluorethyl, 1,1,2-Trifluor-2-chlorethyl, 1,1,2,2,2-Pentafluorethyl, Methoxy, Ethoxy, n-Propyloxy, i-Propyloxy, tert.-Butyloxy, Trichlormethoxy, Trifluormethoxy, 1-Chlorethoxy, 2-Chlorethoxy, 1-Fluorethoxy, 2-Fluorethoxy, 2,2,2-Trichlorethoxy, 2,2,2-Trifluorethoxy, 1,1,2,2-Tetrafluorethoxy, 1,1,2,2,2-Pentafluorethoxy, Methylmercapto, Ethylmercapto, Trichlormethylmercapto, Trifluormethylmercapto, Methylsulfinyl, Ethylsulfinyl, Methylsulfonyl, Ethylsulfonyl oder Trifluormethylsulfonyl.

X in Formel I steht für Wasserstoff, für $C_1$-$C_4$-Alkyl, beispielsweise Methyl, Ethyl, n-Propyl, 2-Propyl, n-Butyl, tert.-Butyl, für gegebenenfalls durch Halogen substituiertes Acyl mit bis zu 7 Kohlenstoffatomen, beispielsweise Acetyl, Propionyl, Chloracetyl, Dichloracetyl, Benzoyl, für ein Alkalimetallion, wie Natrium oder Kalium, oder ein gegebenenfalls alkyliertes Ammoniumion, wie Ammonium, Methylammonium, Dimethylammonium, Trimethylammonium, Tetramethylammonium, Ethylammonium, Diethylammonium, Triethylethylammonium oder n-Butylammonium.

R in Formel I steht für $C_1$-$C_{20}$-Alkyl, vorzugsweise $C_1$-$C_7$-Alkyl, insbesondere $C_1$-$C_4$-Alkyl, beispielsweise Methyl, Ethyl, n-Propyl, i-Propyl, n-Butyl, tert.-Butyl sowie die isomeren Pentyl-, Hexyl- oder Heptylreste, für $C_1$-$C_{12}$-Halogenalkyl, vorzugsweise $C_1$-$C_4$-Halogenalkyl, wie Chlormethyl, Trichlormethyl, 2-Chlorethyl, 2-Fluorethyl, 3-Chlor-n-propyl, 4-Chlor-n-butyl, für einen gegebenenfalls durch Halogen substituierten araliphatischen Rest mit 7 bis 20 Kohlenstoffatomen, insbesondere 7 bis 9 Kohlenstoffatomen, wie Benzyl, 4-Chlorbenzyl, 2,4-Dichlorbenzyl, Phenethyl, Phenpropyl, für einen Cycloalkylrest mit 3 bis 12, vorzugsweise 3 bis 6 Kohlenstoffatomen, insbesondere 5 oder 6 Kohlenstoffatomen, wie Cyclopropyl, Cyclobutyl, Cyclopentyl, Cyclohexyl, für gegebenenfalls durch Halogen, wie Fluor, Chlor, Brom, $C_1$-$C_4$-Alkyl, wie Methyl, Ethyl, $C_1$-$C_4$-Alkoxy, wie Methoxy, Ethoxy, $C_1$-$C_4$-Halogenal-

kyl, wie Trifluormethyl, Nitro oder Cyano substituiertes Phenyl, für Amino, $C_1$-$C_4$-Alkylamino oder Di$C_1$-$C_4$-alkylamino, beispielsweise Methylamino, Ethylamino, n-Propylamino, Isopropylamino, n-Butylamino, Dimethylamino, Diethylamino, Di-n-propylamino, Diisopropylamino oder Di-n-butylamino.

Bevorzugte Diphenylether sind Verbindungen der Formel I, in der $Z^1$, $Z^2$ und $Z^3$ jeweils unabhängig voneinander Wasserstoff, Halogen, $C_1$-$C_4$-Halogenalkyl oder $C_1$-$C_4$-Halogenalkylmercapto, X Wasserstoff, $C_1$-$C_4$-Alkyl oder ein Alkalimetallion und R $C_1$-$C_{20}$-Alkyl, $C_1$-$C_{12}$-Halogenalkyl oder gegebenenfalls durch Halogen, $C_1$-$C_4$-Alkyl, $C_1$-$C_4$-Alkoxy, $C_1$-$C_4$-Halogenalkyl, Nitro oder Cyano substituiertes Phenyl bedeuten, sowie n für die Zahlen 0,1 oder 2 und m für die Zahl 2 stehen. Insbesondere bevorzugt sind Diphenylether der Formel I, wobei $Z^1$ Wasserstoff, $Z^2$ Chlor und $Z^3$ Trifluormethyl bedeuten, insbesondere Diphenylether der Formel I, die einen 2-Chlor-4-trifluormethylphenoxyrest enthalten.

Diphenylether der Formel I erhält man durch Umsetzung von Sulfonylhalogeniden der Formel

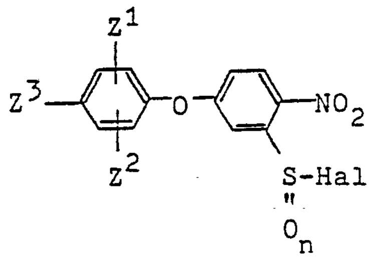

(II)

in der $Z^1$, $Z^2$, $Z^3$ und n die obengenannten Bedeutungen haben und Hal für Halogen steht, mit der mindestens äquimolaren Menge einer Verbindung der Formel

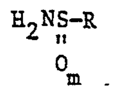

(III)

in der R und m die obengenannten Bedeutungen haben, in einem inerten organischen Lösungsmittel und gegebenenfalls in Gegenwart eines Säureacceptors bei einer Temperatur zwischen — 20 und + 150 °C, insbesondere zwischen 0 und 120 °C. Die Umsetzung kann diskontinuierlich oder kontinuierlich, drucklos oder unter Druck durchgeführt werden.

Das Verfahren zur Herstellung der Diphenylether der Formel I läßt sich beispielhaft durch folgendes Formelschema wiedergeben :

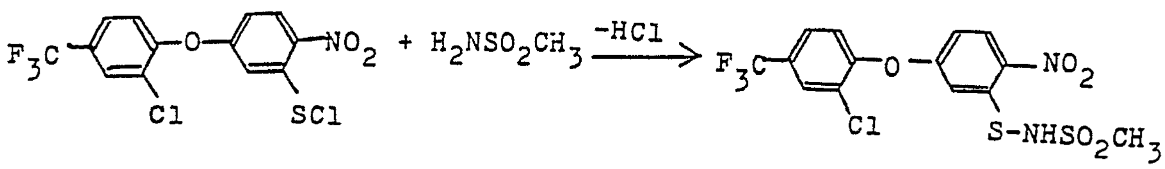


Die Ausgangsstoffe werden in ungefähr stöchiometrischem Verhältnis eingesetzt, d. h. in einem Unter- bzw. Überschuß von bis zu 10 % an Ausgangsstoff III, bezogen auf II. Gegebenenfalls kann ein Säureacceptor zur Vervollständigung der Reaktion zugesetzt werden. Ferner kann der bei der Umsetzung entstehende Halogenwasserstoff auch durch Einleiten eines inerten Gases, wie Stickstoff, ausgetrieben werden. Zweckmäßigerweise wird das Verfahren so durchgeführt, daß man eine Lösung des Sulfonylhalogenids II bei einer Temperatur zwischen — 20 und + 150 °C, vorzugsweise zwischen 0 und + 120 °C, in einem inerten organischen Lösungsmittel, gegebenenfalls gleichzeitig mit der äquimolaren Menge eines Säureacceptors, zu einer Lösung des Ausgangsstoffes III in einem inerten organischen Lösungsmittel zulaufen läßt.

Zur Beendigung der Umsetzung rührt man 0,5 bis 48 Stunden, vorzugsweise 2 bis 12 Stunden, bei 0 bis 60 °C nach. Das Reaktionsgemisch wird filtriert und eingeengt. Die gewünschten Endstoffe können durch Umfällen, Umkristallisieren oder durch Umrühren mit Wasser isoliert werden ; gegebenenfalls können sie durch Chromatographie gereinigt werden.

Ferner erhält man die Diphenylether der Formel I durch Umsetzung von Sulfonamiden der Formel

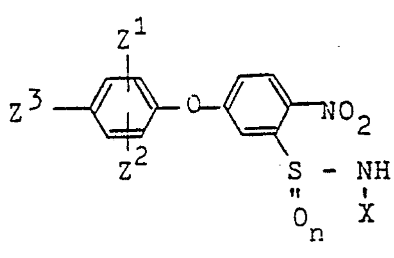

(IV)

in der $Z^1$, $Z^2$, $Z^3$, X und n die obengenannten Bedeutungen haben und Hal für Halogen steht, mit der mindestens äquimolaren Menge einer Verbindung der Formel

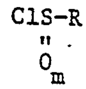

(V)

in der R und m die obengenannten Bedeutungen haben, in einem inerten organischen Lösungsmittel und gegebenenfalls in Gegenwart eines Säureacceptors bei einer Temperatur zwischen — 20 und + 150 °C, insbesondere zwischen 0 und 120 °C. Die Umsetzung kann diskontinuierlich oder kontinuierlich, drucklos oder unter Druck durchgeführt werden.

Die Diphenylether der Formel I, in denen m und n jeweils die Zahlen 1 oder 2 besitzen, können auch durch Oxidation der Verbindungen der Formel I, in denen m und n 0 bedeuten, mittels geeigneter Oxidationsmittel gewonnen werden.

Zur nachträglichen Einführung der Substituenten Alkyl, gegebenenfalls halogeniertes Acyl, Alkalimetallion oder Ammoniumion für X in Verbindungen der Formel I mit X = Wasserstoff können auch die üblichen Alkylierungs-, Acylierungs- oder Neutralisationsreaktionen benutzt werden.

Das Verfahren zur Herstellung der Diphenylether der Formel I durch Umsetzung der Verbindungen der Formel IV mit den Verbindungen der Formel V läßt sich beispielhaft durch folgendes Formelschema wiedergeben :

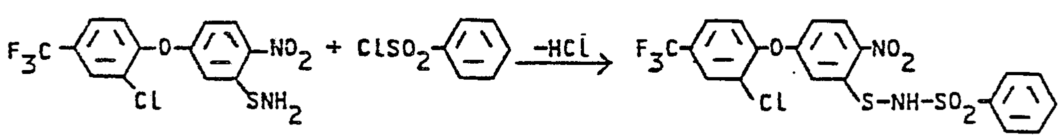


Die Ausgangsstoffe werden in ungefähr stöchiometrischem Verhältnis eingesetzt, d. h. in einem Unter- bzw. Überschuß von bis zu 10 % an Ausgangsstoff V, bezogen auf IV. Gegebenenfalls kann ein Säureacceptor zur Vervollständigung der Reaktion zugesetzt werden. Ferner kann der bei der Umsetzung entstehende Halogenwasserstoff auch durch Einleiten eines inerten Gases, wie Stickstoff, ausgetrieben werden. Zweckmäßigerweise wird das Verfahren so durchgeführt, daß man eine Lösung des Sulfonylhalogenids V bei einer Temperatur zwischen — 20 und + 150 °C, vorzugsweise zwischen 0 und + 120 °C, in einem inerten organischen Lösungsmittel, gegebenenfalls gleichzeitig mit der äquimolaren Menge eines Säureacceptors, zu einer Lösung des Ausgangsstoffes IV in einem inerten organischen Lösungsmittel zulaufen läßt.

Zur Beendigung der Umsetzung rührt man 0,5 bis 48 Stunden, vorzugsweise 2 bis 12 Stunden nach, wobei man die Temperatur zwischen 0 und 60 °C hält. Dann wird das Reaktionsgemisch eingeengt. Die Endstoffe der Formel I können durch Umfällen, Umkristallisieren oder durch Verrühren mit Wasser isoliert werden ; gegebenenfalls können sie durch Chromatographie gereinigt werden.

Für beide Verfahren verwendet man unter den jeweiligen Reaktionsbedingungen inerte organische Lösungsmittel. Als Lösungsmittel kommen beispielsweise Halogenkohlenwasserstoffe, insbesondere Chlorkohlenwasserstoffe, z. B. Tetrachlorethylen, 1,1,2,2- oder 1,1,1,2-Tetrachlorethan, Dichlorpropan, Methylenchlorid, Dichlorbutan, Chloroform, Chlornaphthalin, Dichlornaphthalin, Tetrachlorkohlenstoff, 1,1,1- oder 1,1,2-Trichlorethan, Trichlorethylen, Pentachlorethan, o-, m-p-Difluorbenzol, 1,2-Dichlorethan, 1,1-Dichlorethan, 1,2-cis-Dichlorethylen, Chlorbenzol, Fluorbenzol, Brombenzol, Jodbenzol, o-, p-, und m-Dichlorbenzol, o-, p-, m-Dibrombenzol, o-, m-, p-Chlortoluol, 1,2,4-Trichlorbenzol ; Ether, z. B. Ethylpropylether, Methyl-tert.-butylether, n-Butylethylether, Di-n-Butylether, Diisobutylether, Diisoamylether, Diisopropylether, Anisol, Phenetol, Cyclohexylmethylether, Diethylether, Ethylenglykoldimethylether, Tetrahydrofuran, Dioxan, Thioanisol, β,β'-Dichlordiethalether ; Nitrokohlenwaserstoffe wie Nitromethan, Nitroethan, Nitrobenzol, o-, m-, p-Chlornitrobenzol, o-Nitrotoluol ; Nitrile wie Acetonitril, Butyronitril, Isobutyronitril, Benzonitril, m-Chlorbenzonitril ; aliphatische oder cycloaliphatische Kohlenwasserstoffe, z. B. Heptan, Pinan, Nonan, o-, m-, p-Cyamol, Benzinfraktionen innerhalb eines Siedepunktintervalls von 70 bis 190 °C, Cyclohexan, Methylcyclohexan, Dekalin, Petrolether, Hexan, Ligroin, 2,2,4-Trimethylpentan, 2,2,3-Trimethylpentan, 2,3,3-Trimethylpentan, Octan ; Ester, z. B. Ethylacetat, Acetessigester, Isobutylacetat ; Amide, z. B. Formamid, Methylformamid, Dimethylformamid ; Ketone, z. B. Aceton, Methylethylketon ; und entsprechende Gemische in Betracht. Zweckmäßig verwendet man das Lösungsmittel in einer Menge von 100 bis 2 000 Gew.%, vorzugsweise von 200 bis 700 Gew.%, bezogen auf die Ausgangsstoffe.

Als Säureacceptoren können alle üblichen Säurebindemittel verwendet werden. Hierzu gehören vorzugsweise tertiäre Amine, Erdalkaliverbindungen, Ammoniumverbindungen und Alkaliverbindungen sowie entsprechende Gemische. Es können aber auch Zinkverbindungen verwendet werden. Es kommen z. B. basische Verbindungen in Frage : Kaliumhydroxid, Natriumhydroxid, Kaliumcarbonat,

Natriumcarbonat, Lithiumhydroxid, Lithiumcarbonat, Natriumbicarbonat, Kaliumbicarbonat, Calciumhydroxid, Calciumoxid, Bariumoxid, Magnesiumhydroxid, Magnesiumoxid, Bariumhydroxid, Calciumcarbonat, Magnesiumcarbonat, Magnesiumbicarbonat, Magnesiumacetat, Zinkhydroxid, Zinkoxid, Zinkcarbonat, Zinkbicarbonat, Zinkacetat, Natriumformiat, Natriumacetat, Trimethylamin, Trientylamin, Tripropylamin, Triisopropylamin, Tributylamin, Triisobutylamin, Tri-sec.-butylamin, Tri-tert.-butylamin, Tribenzylamin, Tricyclohexylamin, Triamylamin, Diisopropylethylamin, Trihexylamin, N,N-Dimethylanilin, N,N-Diethylanilin, N,N-Dipropylanilin, N,N-Dimethyltoluoidin, N,N-Diethyltoluidin, N,N-Dipropyltoluidin, N,N-Dimethyl-p-aminopyrridin, N,N-Diethyl-p-aminopyridin, N,N-Dipropyl-p-aminopyridin, N-Methylpyrrolidon, N-Ethylpyrrolidon, N-Methylpiperidin, N-Ethylpiperidin, N-Methylpyrrolidin, N-Ethylpyrrolidin, N-Methylimidazol, N-Ethylimidazol, N-Methylpyrrol, N-Ethylpyrrol, N-Methylmorpholin, N-Ethylmorpholin, N-Methylhexamethylenimin, N-Ethylhexamethylenimin, Pyridin, Chinolin, -Picolin, β-Picolin, -Picolin, Isochinolin, Pyrimidin, Acridin, N,N,N',N'-Tetramethylethylendiamin, N,N,N',N'-Tetraethylethylendiamin, Chinoxalin, Chinazolin, N-Propyldiisopropylamin, N,N'-Dimethylcyclohexylamin, 2,6-Lutidin, 2,4-Lutidin, Trifurylamin, Triethylendiamin.

Die Ausgangsverbindungen werden nach literaturbekannten Methoden hergestellt. So erhält man die Ether der Formel II und IV nach den in der DE-OS 2 833 021 und DE-OS 32 12 165 beschriebenen Verfahrensweisen. Die Verbindungen der Formel III und V sind allgemein zugänglich oder können ebenfalls nach literaturbekannten Methoden hergestellt werden.

Die folgenden Beispiele erläutern die Herstellung der Verbindungen der Formel I nach den vorstehenden Verfahren. Gewichtsteile verhalten sich zu Volumenteilen wie kg zu 1.

Beispiel 1

Eine Lösung von 19,2 Gew.-Teilen 3-[2'-Chlor-4'-trifluormethylphenoxy]-6-nitrophenylsulfenylchlorid in 200 Vol.-Teilen absolutem Tetrahydrofuran wird gleichzeitig mit 4,95 Gew.-Teilen Methansulfonsäureamid und 3,95 Gew.-Teilen Pyridin versetzt, wonach die Reaktionsmischung 2 Stunden bei 40 °C gerührt wird. Anschließend kühlt man ab, rührt die Reaktionsmischung in 500 Vol.-Teile Wasser ein, säuert mit 2 n Salzsäure an und saugt den gebildeten Niederschlag ab. Nach Umkristallisation aus 1,2-Dichlorethan erhält man 18,1 Gew.-Teile (= 82 % Ausbeute) 3-[2'-Chlor-4'-trifluormethylphenoxy]-6-nitrophenyl-N-methansulfonyl-sulfenamid vom Fp. 215-218 °C. (Verbindung Nr. 1).

Beispiel 2

8 Gew.-Teile 3-[2'-Chlor-4'-trifluormethylphenoxy]-6-nitrophenyl-N-methansulfonyl-sulfenamid und 3,25 Gew.-Teile 30 %iger Natriummethylat werden in 100 Vol.-Teilen absolutem Methanol suspendiert, auf Rückflußtemperatur erhitzt. Nach dem Einengen der Reaktionsmischung unter vermindertem Druck erhält man 8,37 Gew.-Teile (= 100 % Ausbeute) des Natriumsalzes von 3-[2'-Chlor-4'-trifluormethylphenoxy]-6-nitrophenyl-N-methansulfonyl-sulfenamid von Fp. 188-191 °C (Verbindung Nr. 2).

Beispiel 3

Eine Lösung von 8,8 Gew.-Teilen 3-[2'-Chlor-4-trifluormethylphenoxy]-6-nitrophenyl-N-methansulfonyl-sulfenamid und 3,85 Gew.-Teilen meta-Chlorperbenzoesäure (85 %ig) in 150 Vol.-Teilen Chloroform, wird 12 Stunden bei Raumtemperatur gerührt. Danach extrahiert man die Reaktionsmischung mit verdünnter Natronlauge und Wasser, trocknet mit Magnesiumsulfat, filtriert und engt zur Trockene ein. Man erhält 8 Gew.-Teile (= 87 % Ausbeute) 3-[2'-Chlor-4'-trifluormethylphenoxy]-6-nitrophenyl-N-methansulfonyl-sulfinsäureamid von Fp. 178-181 °C. (Verbindung Nr. 3).

Beispiel 4

Eine Lösung von 8,8 Gew.-Teilen 3-[2'-Chlor-4'-trifluormethylphenoxy]-6-nitrophenyl-N-methansulfonyl-sulfenamid und 9,36 Gew.-Teile meta-Chlorperbenzoesäure (85 %ig) in 150 Vol-Teilen Chloroform wird 4 Stunden bei 40 °C gerührt. Danach extrahiert man die Reaktionslösung mit verdünnter Natronlauge und Wasser, trocknet mit Magnesiumsulfat, filtriert und engt zur Trockene ein. Man erhält 9 Gew.-Teile (= 95 % Ausbeute) 3-[2'-Chlor-4'-trifluormethylphenoxy]-6-nitrophenyl-N-methansulfonyl-sulfonsäureamid vom Brechungsindex $n_D^{25}$ 1,5469 (Verbindung Nr. 4).

Beispiel 5

Eine Mischung von 10 Gew.-Teilen 3-[2'-Chlor-4'-trifluormethylphenoxy]-6-nitrophenyl-N-methansulfonyl-sulfenamid, 2,9 Gew.-Teilen Dimethylsulfat und 3,2 Gew.-Teilen Kaliumcarbonat in 100 Vol.-Teilen Aceton wird 2 Stunden bei 64 °C gerührt. Danach filtriert man ab und engt die Reaktionslösung zur Trockne ein. Nach der Umkristallisation aus Diisopropylether erhält man 7 Gew.-Teile (= 69 % Ausbeute) 3-[2'-Chlor-4'-trifluormethylphenoxy]-6-nitrophenyl-N-methyl-N-methansulfonyl-sulfenamid vom Fp. 128-130 °C (Verbindung Nr. 5).

Beispiel 6

Eine Lösung von 9,1 Gew.-Teilen 3-[2'-Chlor-4'-trifluormethylphenoxy]-6-nitrophenylsulfensäurechlorid in 50 Vol.-Teilen Pyridin wird portionsweise mit 3,9 Gew.-Teilen Benzolsulfonamid versetzt. Die Reaktionsmischung wird 3 Stunden bei 40 °C nachgerührt, dann in Wasser eingerührt und mit 3 n Salzsäure angesäuert. Der ausgefallene Niederschlag wird abgesaugt und aus 1,2-Dichlorethan umkristallisiert. Man erhält 7 Gew.-Teile (= 77 % Ausbeute) 3-[2'-Chlor-4'-trifluormethylphenoxy]-6-nitrophenyl-N-benzolsulfonyl-sulfenamid vom Fp. 170-178 °C (Verbindung Nr. 6).

Ensprechend können beispielsweise die folgenden Verbindungen der Formel

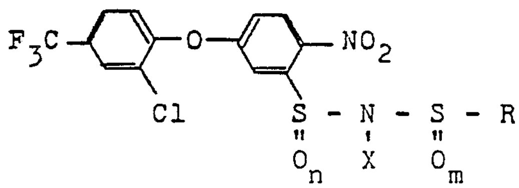

erhalten werden.

| Nr. | n | m | X | R | Fp. [°C]; $n_D^{25}$; Wellenlänge einer Bande im IR-Spektrum |
|---|---|---|---|---|---|
| 7 | 0 | 2 | Acetyl | Methyl | |
| 8 | 0 | 2 | Ammonium | Methyl | |
| 9 | 0 | 2 | Dimethylammonium | Methyl | |
| 10 | 0 | 2 | Ethyl | Methyl | |
| 11 | 1 | 2 | Methyl | Methyl | |
| 12 | 2 | 2 | Methyl | Methyl | |
| 13 | 2 | 2 | Natrium | Methyl | 250°C Zers. |
| 14 | 1 | 2 | Natrium | Methyl | 240°C |
| 15 | 0 | 2 | H | Ethyl | |
| 16 | 0 | 2 | Natrium | Ethyl | |
| 17 | 0 | 2 | Methyl | Ethyl | |
| 18 | 1 | 2 | H | Ethyl | |
| 19 | 2 | 2 | H | Ethyl | |
| 20 | 1 | 2 | Natrium | Ethyl | |
| 21 | 2 | 2 | Natrium | Ethyl | |
| 22 | 0 | 2 | H | n-Propyl | |
| 23 | 0 | 2 | Natrium | n-Propyl | |
| 24 | 1 | 2 | H | n-Propyl | |
| 25 | 2 | 2 | H | n-Propyl | |
| 26 | 1 | 2 | Natrium | n-Propyl | |
| 27 | 2 | 2 | Natrium | n-Propyl | |
| 28 | 0 | 2 | H | i-Propyl | |
| 29 | 1 | 2 | H | i-Propyl | |
| 30 | 2 | 2 | H | i-Propyl | |
| 31 | 0 | 2 | Natrium | i-Propyl | |
| 32 | 1 | 2 | Natrium | i-Propyl | |
| 33 | 2 | 2 | Natrium | i-Propyl | |
| 34 | 0 | 2 | Methyl | i-Propyl | |
| 35 | 0 | 2 | H | n-Butyl | |

(Fortsetzung)

| Nr. | n | m | X | R | Fp. [°C]; $n_D^{25}$; Wellenlänge einer Bande im IR-Spektrum |
|---|---|---|---|---|---|
| 36 | 1 | 2 | H | n-Butyl | |
| 37 | 2 | 2 | H | n-Butyl | |
| 38 | 0 | 2 | Natrium | n-Butyl | |
| 39 | 1 | 2 | Natrium | n-Butyl | |
| 40 | 2 | 2 | Natrium | n-Butyl | |
| 41 | 0 | 2 | H | Chlormethyl | |
| 42 | 1 | 2 | H | Chlormehtyl | |
| 43 | 2 | 2 | H | Chlormethyl | |
| 44 | 0 | 2 | Natrium | Chlormethyl | |
| 45 | 1 | 2 | Natrium | Chlormethyl | |
| 46 | 2 | 2 | Natrium | Chlormethyl | |
| 47 | 0 | 2 | H | Benzyl | |
| 48 | 0 | 2 | Natrium | Benzyl | |
| 49 | 0 | 2 | H | Chlorbenzyl | |
| 50 | 0 | 2 | Natrium | Chlorbenzyl | |
| 51 | 0 | 2 | Natrium | Phenyl | 150°C (Zers.) |
| 52 | 1 | 2 | H | Phenyl | 70–75°C |
| 53 | 2 | 2 | H | Phenyl | 90–92°C |
| 54 | 0 | 2 | Methyl | Phenyl | 145–148°C |
| 55 | 1 | 2 | Natrium | Phenyl | |
| 56 | 2 | 2 | Natrium | Phenyl | |
| 57 | 0 | 2 | H | 4-Chlorphenyl | 168 – 170 |
| 58 | 0 | 2 | Natrium | 4-Chlorphenyl | 145°C (Zers.) |
| 59 | 0 | 2 | Methyl | 4-Chlorphenyl | 128–132°C |
| 60 | 0 | 2 | Ethyl | 4-Chlorphenyl | |
| 61 | 1 | 2 | H | 4-Chlorphenyl | 75–82°C |
| 62 | 2 | 2 | H | 4-Chlorphenyl | 75–80°C |
| 63 | 0 | 2 | H | 2-Chlorphenyl | 110–113°C |
| 64 | 0 | 2 | Natrium | 2-Chlorphenyl | 100°C (Zers.) |
| 65 | 0 | 2 | Methyl | 2-Chlorphenyl | 130–140°C |
| 66 | 1 | 2 | H | 2-Chlorphenyl | |
| 67 | 2 | 2 | H | 2-Chlorphenyl | 170–174°C |
| 68 | 0 | 2 | H | 4-Fluorphenyl | 115–120°C |
| 69 | 0 | 2 | Natrium | 4-Fluorphenyl | 70°C (Zers.) |
| 70 | 0 | 2 | Methyl | 4-Fluorphenyl | 1.6141 |
| 71 | 1 | 2 | H | 4-Fluorphenyl | Öl |
| 72 | 2 | 2 | H | 4-Fluorphenyl | Öl |
| 73 | 0 | 2 | H | 4-Bromphenyl | 145–150°C |
| 74 | 0 | 2 | Natrium | 4-Bromphenyl | 160°C (Zers.) |
| 75 | 0 | 2 | Methyl | 4-Bromphenyl | 64–66°C |
| 76 | 1 | 2 | H | 4-Bromphenyl | 240°C |
| 77 | 2 | 2 | H | 4-Bromphenyl | Öl |
| 78 | 0 | 2 | H | 2,6-Dichlorphenyl | 168 – 172 |
| 79 | 0 | 2 | Natrium | 2,6-Dichlorphenyl | |
| 80 | 0 | 2 | Methyl | 2,6-Dichlorphenyl | |

(Fortsetzung)

| Nr. | n | m | X | R | Fp. [°C]; $n_D^{25}$; Wellenlänge einer Bande im IR-Spektrum |
|---|---|---|---|---|---|
| 81 | 0 | 2 | H | 2,4-Dichlorphenyl | |
| 82 | 0 | 2 | Natrium | 2,4-Dichlorphenyl | |
| 83 | 0 | 2 | H | 4-Chlor-3-nitrophenyl | |
| 84 | 0 | 2 | Natrium | 4-Chlor-3-nitrophenyl | |
| 85 | 0 | 2 | Methyl | 4-Chlor-3-nitrophenyl | |
| 86 | 0 | 2 | H | 2-Nitrophenyl | |
| 87 | 0 | 2 | Natrium | 2-Nitrophenyl | |
| 88 | 0 | 2 | H | 4-Nitrophenyl | |
| 89 | 0 | 2 | Natrium | 4-Nitrophenyl | |
| 90 | 0 | 2 | Methyl | 4-Nitrophenyl | |
| 91 | 0 | 0 | H | 4-Nitrophenyl | |
| 92 | 1 | 0 | H | 4-Nitrophenyl | |
| 93 | 2 | 0 | H | 4-Nitrophenyl | |
| 94 | 1 | 1 | H | 4-Nitrophenyl | |
| 95 | 2 | 1 | H | 4-Nitrophenyl | |
| 96 | 2 | 2 | H | 4-Nitrophenyl | |
| 97 | 0 | 2 | H | 4-Cyanophenyl | |
| 98 | 0 | 2 | Natrium | 4-Cyanophenyl | |
| 99 | 0 | 2 | H | 4-Methylphenyl | 198 - 202 |
| 100 | 0 | 2 | Natrium | 4-Methylphenyl | 85°C (Zers.) |
| 101 | 0 | 2 | Methyl | 4-Methylphenyl | 106-110°C |
| 102 | 0 | 2 | H | 3-Nitrophenyl | 148-152°C |
| 103 | 0 | 2 | Natrium | 3-Nitrophenyl | 105°C (Zers.) |
| 104 | 0 | 2 | Methyl | 3-Nitrophenyl | 128-134°C |
| 105 | 0 | 2 | H | 4-Methoxyphenyl | 165-172°C |
| 106 | 0 | 2 | Natrium | 4-Methoxyphenyl | 90°C |
| 107 | 0 | 2 | Methyl | 4-Methoxyphenyl | 98-106°C |
| 108 | 1 | 2 | H | 4-Methoxyphenyl | 192-196°C (Zers.) |
| 109 | 2 | 2 | H | 4-Methoxyphenyl | |
| 110 | 0 | 2 | H | 4-Trifluormethoxyphenyl | |
| 111 | 0 | 2 | H | 4-Trifluormethylphenyl | |
| 112 | 0 | 2 | Natrium | 4-Trifluormethylphenyl | |
| 113 | 0 | 2 | H | 3-Trifluormethylphenyl | |
| 114 | 0 | 2 | Natrium | 3-Trifluormethylphenyl | |
| 115 | 0 | 2 | H | 2,2,2-Trifluorethyl | |
| 116 | 0 | 2 | Natrium | 2,2,2-Trifluorethyl | |
| 117 | 2 | 2 | H | 2,2,2-Trifluorethyl | |
| 118 | 0 | 2 | H | Methylamino | |
| 119 | 0 | 2 | H | Ethylamino | |
| 120 | 0 | 2 | H | Propylamino | |
| 121 | 0 | 2 | H | Isopropylamino | |
| 122 | 2 | 2 | H | 4-Methylphenyl | 56-60°C |
| 123 | 1 | 2 | H | 4-Methylphenyl | 165-170°C (Zers.) |
| 124 | 2 | 2 | H | 3-Nitrophenyl | Öl |
| 125 | 1 | 2 | H | 3-Nitrophenyl | 65-70°C |
| 126 | 2 | 2 | Natrium | 2-Chlorphenyl | 93-98°C |

Beispielsweise können auch folgende Diphenylether der Formel I erhalten werden :

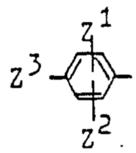

| Beispiel-Nr. | | n | m | X | R | Fp. [°C]; $n_D^{25}$ |
|---|---|---|---|---|---|---|
| 127 | 2,4-Dichlorphenoxy | 0 | 2 | H | Methyl | |
| 128 | 2,4-Dichlorphenoxy | 0 | 2 | Natrium | Methyl | |
| 129 | 2,4-Dibromphenoxy | 0 | 2 | H | Methyl | |
| 130 | 2,4-Dibromphenoxy | 0 | 2 | Natrium | Methyl | |
| 131 | 3-Chlor-4-trifluormethylphenoxy | 0 | 2 | H | Methyl | |
| 132 | 3-Chlor-4-trifluormethylphenoxy | 0 | 2 | Natrium | Methyl | |
| 133 | 2,6-Dichlor-4-trifluormethylphenoxy | 0 | 2 | H | Methyl | |
| 134 | 2,6-Dichlor-4-trifluormethylphenoxy | 0 | 2 | Natrium | Methyl | |
| 135 | 2,6-Dichlor-4-trifluormethylphenoxy | 0 | 2 | Methyl | Methyl | |
| 136 | 2,6-Dichlor-4-trifluormethylphenoxy | 0 | 2 | H | Isopropyl | |
| 137 | 2,6-Dichlor-4-trifluormethylphenoxy | 0 | 2 | H | Phenyl | |
| 138 | 2,6-Dichlor-4-trifluormethylphenoxy | 0 | 2 | H | 4-Chlorphenyl | |
| 139 | 2,6-Dichlor-4-trifluormethylphenoxy | 0 | 2 | H | 4-Fluorphenyl | |

Die Diphenylether der Formel I und ihre Salze können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittleren Naphthalinen oder Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenylsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem

Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gewichtsprozent, vorzugsweise zwischen 0,5 und 90 Gewichtsprozent, Wirkstoff.

Beispiele für Formulierungen sind :

I. Man vermischt 90 Gewichtsteile des Wirkstoffs Nr. 3 mit 10 Gewichtsteilen N-Methyl-α-pyrrolidon und erhält eine Lösung, die zur Anwendung in Form kleinster Tropfen geeignet ist.

II. 10 Gewichtsteile des Wirkstoffs Nr. 4 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecyl-benzolsulfonsäure und 2 Gewichtsteilen des Anlagerungsproduktes von 40 Mol Ethylenoxid an 1 Mol Ricinusöl besteht.

III. 20 Gewichtsteile des Wirkstoffs Nr. 5 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

IV. 20 Gewichtsteile des Wirkstoffs Nr. 106 werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

V. 80 Gewichtsteile des Wirkstoffs Nr. 1 werden mit 3 Gewichtsteilen des Natriumsalzes der Diisobutyl-naphthalin-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

VI. 5 Gewichtsteile des Wirkstoffs Nr. 2 werden mit 95 Gewichtsteilen feinteiligem Kaolin vermischt. Man erhält auf diese Weise ein Stäubemittel, das 5 Gewichtsprozent des Wirkstoffs enthält.

VII. 30 Gewichtsteile des Wirkstoffs Nr. 122 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Teile des Wirkstoffs Nr. 13 werden mit 2 Teilen Calciumsalz der Dodecylbenzolsulfonsäure, 8 Teilen Fettalkohol-polyglykolether, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Die Applikation kann im Vorauflauf- oder im Nachauflaufverfahren erfolgen. Sind die Wirkstoffe bei Nachauflaufanwendung für gewisse Kulturpflanzen weniger verträglich, so können auch Aufbringungstechniken angewandt werden, bei welchen die herbiziden Mittel mit Hilfe der Spitzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Jahreszeit, Zielpflanzen und Wachstumsstadium 0,025 bis 3,0 kg/ha, vorzugsweise 0,05 bis 1,0 kg/ha.

Die Wirkung der Diphenylether der Formel I auf das Wachstum von Pflanzen läßt sich durch Gewächshausversuche zeigen :

Als Kulturgefäße dienen Plastikblumentöpfe mit 300 $cm^3$ Inhalt und lehmigem Sand mit etwa 1,5 % Humus als Substrat. Die Samen der Testpflanzen werden nach Arten getrennt flach eingesät. Bei Vorauflaufbehandlung werden die Wirkstoffe unmittelbar danach auf die Erdoberfläche aufgebracht. Sie werden hierbei in Wasser als Verteilungsmittel suspendiert oder emulgiert und mittels fein verteilender

Düsen gespritzt. Die Aufwandmengen betragen 3,0 kg/ha.

Nach dem Aufbringen der Mittel werden die Gefäße leicht beregnet, um Keimung und Wachstum in Gang zu bringen. Danach deckt man die Gefäße mit durchsichtigen Plastikhauben ab, bis die Pflanzen angewachsen sind. Diese Abdeckung bewirkt ein gleichmäßiges Keimen der Testpflanzen, sofern dies nicht durch die Wirkstoffe beeinträchtigt wird.

Zum Zwecke der Nachauflaufbehandlung zieht man die Testpflanzen je nach Wuchsform erst bis zu einer Wuchshöhe von 3 bis 15 cm an und behandelt sie danach. Reis wird in einem mit Torfmull (peat) angereicherten Substrat angezogen. Zur Nachauflaufbehandlung werden entweder direkt gesäte und in den gleichen Gefäßen aufgewachsene Pflanzen ausgewählt, oder sie werden erst als Keimpflanzen getrennt angezogen und einige Tage vor der Behandlung in die Versuchsgefäße verpflanzt. Die Aufwandmengen für die Nachauflaufbehandlung betragen 0,06, 0,25 und 3,0 kg Wirkstoff/ha. Eine Abdeckung unterbleibt bei der Nachauflaufbehandlung.

Die Versuchsgefäße werden im Gewächshaus aufgestellt, wobei für wärmeliebende Arten wärmere Bereiche (200 bis 35 °C) und für solche gemäßigter Klimate 10 bis 25 °C bevorzugt werden. Die Versuchsperiode erstreckt sich über 2 bis 4 Wochen. Während dieser Zeit werden die Pflanzen gepflegt, und ihre Reaktion auf die einzelnen Behandlungen wird ausgewertet. Bewertet wird nach einer Skala von 0 bis 100. Dabei bedeutet 100 kein Aufgang der Pflanzen bzw. völlige Zerstörung zumindest der oberirdischen Teile.

Die in den Gewächshausversuchen verwendeten Pflanzen setzen sich aus folgenden Arten zusammen :

Amaranthus retroflexus (zurückgekrümmter Fuchsschwanz), Arachis hypogaea (Erdnüsse), Avena sativa (Hafer), Centaurea cyanus (Kornblume), Chenopodium album (Weißer Gänsefuß), Echinochloa crus-galli (Hühnerhirse), Galium aparine (Klettenlabkraut), Ipomoea spp. (Prunkwindearten), Oryza sativa (Reis), Sinapis alba (Weißer Senf), Solanum nigrum (Schwarzer Nachtschatten), Triticum aestivum (Weizen).

Bei Vorauflaufanwendung erweisen sich beispielsweise die Verbindungen Nr. 4, 106 und 122 als herbizid wirksam, wobei sie für Hafer als beispielhaft ausgewähltes Getreide selektiv sind.

Bei Nachauflaufanwendung von beispielsweise 3,0 kg Wirkstoff/ha sind die Verbindungen Nr. 1, 2, 3, 4 und 5 stark wirksam gegen breitblättrige unerwünschte Pflanzen, wobei die Verbindungen 3, 4 und 5 sowie außerdem die Verbindung Nr. 13 auch gegen Gräser, wie Hühdnerhirse, wirksam sind. Die Verbindungen Nr. 1 und 3 sind bei niedrigen Aufwandmengen, wie 0,06 oder 0,25 kg Wirkstoff/ha, zur selektiven Bekämpfung von unerwünschten Pflanzen geeignet.

In Anbetracht der Verträglichkeit der Applikationsmethoden können die erfindungsgemäßen Verbindungen noch in einer weiteren Zahl von Kulturpflanzen zur Beseitigung unerwünschter Wildgräser oder grasartiger Kulturpflanzen, sofern sie an gewissen Standorten unerwünscht sind, eingesetzt werden. In Betracht kommen beispielsweise folgende Kulturen :

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Avena sativa | Hafer |
| Beta vulgaris spp. altissima | Zuckerrübe |
| Beta vulgaris spp. rapa | Futterrübe |
| Camellia sinensis | Teestrauch |
| Carthamus tinctorius | Saflor - Färberdistel |
| Carya illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glycine max | Sojabohne |
| Gossypium hirsutum (Gossypium arboreum Gossypium herbaceum | Baumwolle |

| | |
|---|---|
| Gossypium vitifolium) | |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Mentha piperita | Pfefferminze |
| Musa spp. | Obst- und Mehlbanane |
| Nicotiana tabacum | Tabak |
| (N. rustica) | |
| Olea europaea | Ölbaum |
| Oryza sativa | Reis |
| Panicum miliaceum | Rispenhirse |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirse |
| Petroselinum crispum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sasamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die Diphenylether der Formel I mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, andere Diphenylether, Triazinone, Uracile, Benzofuranderivate, Cyclohexan-1,3-dionderivate anderer Struktur und andere herbizide Wirkstoffe in Betracht.

Außerdem kann es von Nutzen sein, die Diphenylether der Formel I allein oder in Kombination mit anderen Herbiziden, auch noch mit weiteren Pflanzenschutzmitteln gemischt gemeinsam auszubringen, beispielsweise mit Mitteln zur Bekämpfung von Schädlingen oder phytopathogenen Pilzen bzw.

Bakterien. Von Interesse ist ferner die Mischbarkeit mit Mineralsalzlösungen, welche zur Bekämpfung von Ernährungs- und Spurenelementmängeln eingesetzt werden. Es können auch nicht-phytotoxische Öle und Ölkonzentrate zugesetzt werden.

**Patentansprüche**

1. Diphenylether der Formel

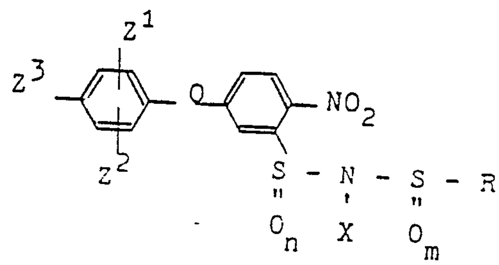

(I)

in der

$Z^1$ und $Z^2$ jeweils unabhängig voneinander Wasserstoff, Halogen, Nitro, Cyano, Carboxy, $C_1$-$C_4$-Alkyl, $C_1$-$C_4$-Halogenalkyl oder $C_1$-$C_4$-Alkoxy,

$Z^3$ Halogen, Nitro, Cyano, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylmercapto, $C_1$-$C_4$-Halogenalkylmercapto, $C_1$-$C_4$-Alkylsulfinyl, $C_1$-$C_4$-Halogenalkylsulfinyl, $C_1$-$C_4$-Alkylsulfonyl oder $C_1$-$C_4$-Halogenalkylsulfonyl,

X Wasserstoff, $C_1$-$C_4$-Alkyl, gegebenenfalls halogeniertes Acyl mit bis zu 7 Kohlenstoffsatomen, ein Alkalimetallion oder ein gegebenenfalls alkyliertes Ammoniumion,

R $C_1$-$C_{20}$-Alkyl, $C_1$-$C_{12}$-Halogenalkyl, einen gegebenenfalls durch Halogen substituierten araliphatischen Rest mit 7 bis 20 Kohlenstoffatomen, Cycloalkyl mit 3 bis 12 Kohlenstoffatomen, gegebenenfalls substituiertes Phenyl, Amino, $C_1$-$C_4$-Alkyl-amino oder Di-$C_1$-$C_4$-alkyl-amino und

m und n jeweils unabhängig voneinander die Zahlen 0, 1 oder 2 bedeuten.

2. Diphenylether der Formel I gemäß Anspruch 1, dadurch gekennzeichnet, daß $Z^1$, $Z^2$ und $Z^3$ in 2-, 4- und 6-Stellung stehen und unabhängig voneinander Wasserstoff, Halogen, $C_1$-$C_4$-Halogenalkyl oder $C_1$-$C_4$-Halogenalkylmercapto, X Wasserstoff, $C_1$-$C_4$-Alkyl oder ein Alkalimetallion und R $C_1$-$C_{20}$-Alkyl, $C_1$-$C_{12}$-Halogenalkyl oder gegebenenfalls durch Halogen, $C_1$-$C_4$-Alkyl, $C_1$-$C_4$-Alkoxy, $C_1$-$C_4$-Halogenalkyl, Nitro oder Cyano substituiertes Phenyl bedeuten, sowie n für die Zahlen 0, 1 oder 2 und m für die Zahl 2 stehen.

3. Diphenylether der Formel I gemäß Anspruch 1, dadurch gekennzeichnet, daß $Z^1$ Wasserstoff, $Z^2$ Chlor und $Z^3$ Trifluormethyl bedeuten.

4. Verfahren zur Herstellung von Diphenylethern der Formel I gemäß Anspruch 1, dadurch gekennzeichnet, daß man ein Sulfonylhalogenid der Formel

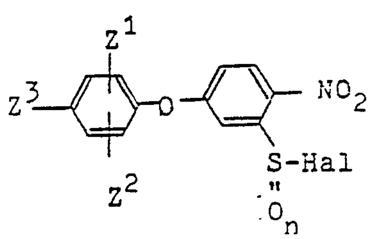

(II)

in der $Z^1$, $Z^2$, $Z^3$ und n die im Anspruch 1 genannten Bedeutungen haben und Hal für Halogen steht, mit der mindestens äquimolaren Menge einer Verbindung der Formel

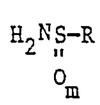

(III)

in der R und m die obengenannten Bedeutungen haben, umsetzt.

5. Verfahren zur Herstellung von Diphenylethern der Formel I gemäß Anspruch 1, dadurch gekennzeichnet, daß man ein Sulfonamid der Formel

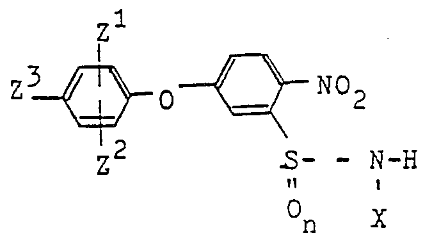

(IV)

in der $Z^1$, $Z^2$, $Z^3$, X und n die im Anspruch 1 genannten Bedeutungen haben und Hal für Halogen steht, mit der mindestens äquimolaren Menge einer Verbindung der Formel

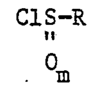

(V)

in der R und m die obengenannten Bedeutungen haben, umsetzt.

6. Herbizid, enthaltend einen Diphenylether der Formel I gemäß Anspruch 1.

7. Herbizid, entahltend inerte Zusatzstoffe und einen Diphenylether der Formel I gemäß Anspruch 1.

8. Herbizid, enthaltend einen Diphenylether der Formel I gemäß Anspruch 2.

9. Herbizid, enthaltend einen Diphenylether der Formel I gemäß Anspruch 3.

10. Verfahren zur Bekämpfung unerwünschten Pflanzenwuchses, dadurch gekennzeichnet, daß man die unerwünschten Pflanzen oder die von unerwünschtem Pflanzenwuchs freizuhaltende Fläche mit einer herbizid wirksamen Menge eines Diphenylethers der Formel I gemäß Anspruch 1 behandelt.

**Claims**

1. A diphenyl ether of the formula

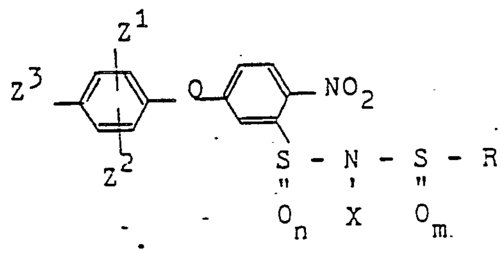

(I)

where

$Z^1$ and $Z^2$ independently of one another are hydrogen, halogen, nitro, cyano, carboxyl, $C_1$-$C_4$-alkyl, $C_1$-$C_4$-haloalkyl or $C_1$-$C_4$-alkoxy,

$Z^3$ is halogen, nitro, cyano, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylmercapto, $C_1$-$C_4$-haloalkylmercapto, $C_1$-$C_4$-alkylsulfinyl, $C_1$-$C_4$-haloalkylsulfinyl, $C_1$-$C_4$-alkylsulfonyl or $C_1$-$C_4$-haloalkylsulfonyl,

X is hydrogen, $C_1$-$C_4$-alkyl, unsubstituted or halogen-substituted acyl of up to 7 carbon atoms, an alkali metal ion or an unsubstituted or alkyl-substituted ammonium ion,

R is $C_1$-$C_{20}$-alkyl, $C_1$-$C_{12}$-haloalkyl, an unsubstituted or halogen-substituted araliphatic radical of 7 to 20 carbon atoms, cycloalkyl of 3 to 12 carbon atoms, unsubstituted or substituted phenyl, amino, $C_1$-$C_4$-alkyl-amino or di-$C_1$-$C_4$-alkylamino, and

n and m independently of one another are 0, 1 or 2.

2. A diphenyl ether of the formula I as claimed in claim 1, where $Z^1$, $Z^2$ and $Z^3$ are in the 2-, 4- and 6-positions and, independently of one another, are hydrogen, halogen, $C_1$-$C_4$-haloalkyl or $C_1$-$C_4$-haloalkylmercapto, X is hydrogen, $C_1$-$C_4$-alkyl or an alkali metal ion, R is $C_1$-$C_{20}$-alkyl, $C_1$-$C_{12}$-haloalkyl or phenyl which is unsubstituted or substituted by halogen, $C_1$-$C_4$-alkyl, $C_1$-$C_4$-alkoxy, $C_1$-$C_4$-haloalkyl, nitro or cyano, n is 0, 1 or 2, and m is 2.

3. A diphenyl ether of the formula I as claimed in claim 1, where $Z^1$ is hydrogen, $Z^2$ is chlorine and $Z^3$ is trifluoromethyl.

4. A process for the preparation of a diphenyl ether of the formula I as claimed in claim 1, wherein a sulfonyl halide of the formula

(See Scheme page 15)

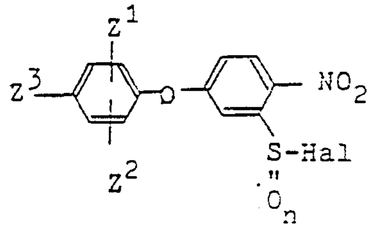

(II)

where $Z^1$, $Z^2$, $Z^3$ and n have the meanings given in claim 1, and Hal is halogen, is reacted with not less than an equimolar amount of a compound of the formula

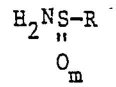

(III)

where R and m have the above meanings.

5. A process for the preparation of a diphenyl ether of the formula I as claimed in claim 1, wherein a sulfonamide of the formula

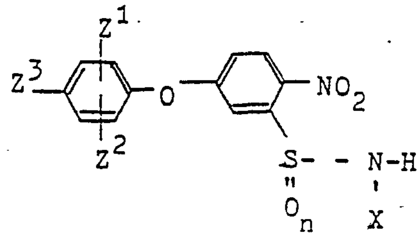

(IV)

where $Z^1$, $Z^2$, $Z^3$, X and n have the meanings given in claim 1, and Hal is halogen, is reacted with not less than an equimolar amount of a compound of the formula

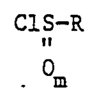

(V)

where R and m have the above meanings.

6. A herbicide containing a diphenyl ether of the formula I as claimed in claim 1.

7. A herbicide containing inert additives and a diphenyl ether of the formula I as claimed in claim 1.

8. A herbicide containing a diphenyl ether of the formula I as claimed in claim 2.

9. A herbicide containing a diphenyl ether of the formula I as claimed in claim 3.

10. A process for combatting the growth of unwanted plants, wherein the unwanted plants or the area to be kept free from unwanted plant growth are treated with a herbicidally effective amount of a diphenyl ether of the formula I as claimed in claim 1.

**Revendications**

1. Ethers diphényliques de formule

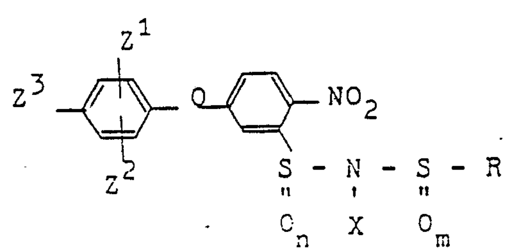

(I)

dans laquelle

$Z^1$ et $Z^2$ représentent chacun indépendamment l'un de l'autre, hydrogène, halogène, nitro, cyano, carboxy, alkyle en $C_1$-$C_4$, halogénoalkyle en $C_1$-$C_4$ ou alcoxy en $C_1$-$C_4$,

$Z^3$ représente halogène, nitro, cyano, alkyle en $C_1$-$C_4$, halogénoalkyle en $C_1$-$C_4$, alcoxy en $C_1$-$C_4$, halogénoalcoxy en $C_1$-$C_4$, alkylmercapto en $C_1$-$C_4$, halogénoalkylmercapto en $C_1$-$C_4$, alkylsulfinyle en $C_1$-$C_4$, halogénoalkylsulfinyle en $C_1$-$C_4$, alkylsulfonyle en $C_1$-$C_4$ ou halogénoalkylsulfonyle en $C_1$-$C_4$,

X représente hydrogène, alkyle en $C_1$-$C_4$, acyle ayant jusqu'à 7 atomes de carbone éventuellement halogéné, un ion métal alcalin ou un ion ammonium éventuellement alkylé,

R représente alkyle en $C_1$-$C_{20}$, halogénoalkyle en $C_1$-$C_{12}$, un reste araliphatique ayant 7 à 20 atomes de carbone, éventuellement substitué par halogène, cycloalkyle de 3 à 12 atomes de carbone, phényle éventuellement substitué, amino, amino-alkyle (en $C_1$-$C_4$) ou diamino-alkyle (en $C_1$-$C_4$) et

m et n chacun, indépendamment l'un de l'autre, les chiffres 0, 1 ou 2.

2. Ethers diphényliques de formule I, selon la revendication 1, caractérisés par le fait que $Z^1$, $Z^2$ et $Z^3$ sont en position 2-, 4- et 6- et représentent, indépendamment l'un de l'autre, hydrogène, halogène, halogénoalkyle en $C_1$-$C_4$ ou halogénoalkylmercapto en $C_1$-$C_4$, X représente hydrogène, alkyle en $C_1$-$C_4$ ou un ion métal alcalin et R représente alkyle en $C_1$-$C_{20}$, halogénoalkyle en $C_1$-$C_{12}$ ou phényle, éventuellement substitué par halogène, alkyle en $C_1$-$C_4$, alcoxy en $C_1$-$C_4$, halogénoalkyle en $C_1$-$C_4$, nitro, ou cyano, et n représente le chiffre 0, 1 ou 2 et m le chiffre 2.

3. Ethers diphényliques de formule I, selon la revendication 1, caractérisés par le fait que $Z^1$ représente hydrogène, $Z^2$ chlore et $Z^3$ trifluorométhyle.

4. Procédé de préparation d'éthers diphényliques de formule I, selon la revendication 1, caractérisé par le fait que l'on fait réagir un halogénure de sulfonyle de formule

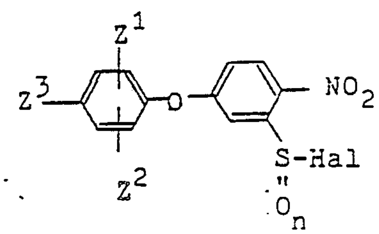

(II)

dans laquelle $Z^1$, $Z^2$, $Z^3$ et n ont les significations indiquées dans la revendication 1 et Hal est mis pour halogène avec la quantité au moins équimolaire d'un composé de formule

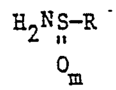

(III)

dans laquelle R et m ont les significations sus-indiquées.

5. Procédé de préparation d'éthers diphényliques de formule I, selon la revendication 1, caractérisé par le fait que l'on fait réagir un sulfamide de formule

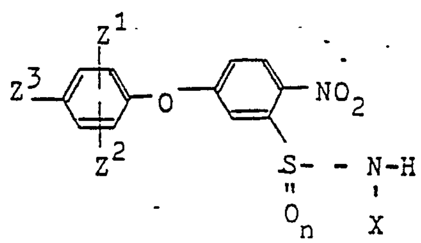

(IV)

dans laquelle $Z^1$, $Z^2$, $Z^3$ et n ont les significations indiquées dans la revendication 1 et Hal est mis pour halogène, avec la quantité au moins équimolaire d'un composé de formule

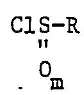

(V)

dans laquelle R et m ont les significations sus-indiquées.

6. Herbicide contenant un éther diphénylique de formule I, selon la revendication 1.

7. Herbicide contenant des additifs inertes et un éther diphénylique de formule I, selon la revendication 1.

8. Herbicide contenant un éther diphénylique de formule I, selon la revendication 2.

9. Herbicide contenant un éther diphénylique de formule I, selon la revendication 3.

10. Procédé pour lutter contre la croissance de plantes indésirables, caractérisé par le fait que l'on traite les plantes indésirables ou les surfaces à maintenir libres de la croissance de plantes indésirables avec une quantité efficace au point de vue herbicide d'un éther diphénylique de formule I, selon la revendication 1.